# EUROPÄISCHE PATENTANMELDUNG

(11) **EP 0 989 030 A2**
(43) Veröffentlichungstag der Anmeldung: **29.03.2000**
(21) Anmeldenummer: 99116402.1
(22) Anmeldetag: 20.08.1999
(51) Int. Cl.: B60R 13/08

(54) **Verfahren zur Herstellung eines Hitzeschildes und ein mit diesem Verfahren hergestelltes Hitzeschild**

(30) Priorität: 28.08.1998 DE 19839237
(71) Anmelder: REINZ-DICHTUNGS-GMBH, 89233 Neu-Ulm (DE)
(72) Erfinder: Lemke, Kai, 89075 Ulm (DE); Bretschneider, Bernd, 89335 Ichenhausen (DE); Giaimi, Giacomo, 89075 Ulm (DE); Görlich, Bruno, 89264 Weissenhorn (DE); Grafl, Dieter, Dr., 89081 Ulm (DE)
(74) Vertreter: Pfenning, Meinig & Partner

(57) **Zusammenfassung**

Die vorliegende Erfindung betrifft ein Verfahren zur Herstellung eines Hitzeschildes und ein mit diesem Verfahren hergestelltes Hitzeschild. Derartige Hitzeschilder werden insbesondere im Bereich der Kraftfahrzeugindustrie eingesetzt.

Nach dem erfindungsgemäßen Verfahren wird ein in geeigneter Kontur vorgeformtes Isoliermaterial aus Graphit, beispielsweise Vermiculit, ohne Bindemittel als Isolierplatte (4) zwischen zwei Flachmaterialien (2, 3), beispielsweise aus Blech, eingelegt. Die Flachmaterialien (2, 3) werden anschließend an ihren Rändern miteinander kraft- und/oder formschlüssig verbunden. Das Isoliermaterial wird dabei vor der Ablage auf das Flachmaterial oder danach zu einer kohärenten Isolierplatte verdichtet.

## Beschreibung

Die Erfindung betrifft ein Verfahren zur Herstellung eines Hitzeschildes und ein mit diesem Verfahren hergestelltes Hitzeschild nach dem Oberbegriff des Anspruches 1. Derartige Hitzeschilder werden überall dort benötigt, wo temperaturempfindliche Aggregate, Bauteile oder Verbindungsleitungen in einer Weise geschützt werden müssen, daß Wärmestrahlung nicht direkt auf sie auftreffen kann. Dies ist insbesondere bei Kraftfahrzeugen der Fall, wo heiße Teile des Antriebsaggregates in unmittelbarer räumlicher Nähe zu weiteren temperaturempfindlichen Aggregaten angeordnet sind.

Die immer bessere Ausnutzung der Motorräume von Kraftfahrzeugen führt dazu, daß wärmeempfindliche Komponenten sehr nahe an sehr heißen Bauteilen, wie beispielsweise der Abgasanlage, dem Verbrennungsmotor oder den Wärmetauschern angeordnet werden müssen. Daher besteht ein großer Bedarf an Hitzeschildern insbesondere in der Kraftfahrzeugindustrie.

Aus der DE 38 34 054 C2 ist ein Hitzeschild bekannt, bei dem zur Abschirmung von Wärmestrahlung mindestens zwei Flachmaterialien verwendet werden, die an mindestens zwei einander abgewandten Randbereichen miteinander verbunden sind. Die genannten Flachmaterialien sind so miteinander verbunden, daß zwischen ihnen ein Abstandsspalt ausgebildet wird. Außerdem ist es bei diesem bekannten Hitzschild wichtig, daß das der Wärmestrahlungsquelle zugewandte Flachmaterial durch eine vorgegebene Profilierung oder Sickung oder entsprechende Materialauswahl in ihrer Ausdehnungscharakteristik so orientiert ist, daß sie in Richtung auf die Wärmequelle erfolgt. Durch eine entsprechende Ausbildung soll eine Anpassung an die auftretende Wärmebelastung ermöglicht werden, da sich bei höheren Temperaturen der Abstand der beiden verwendeten Flachmaterialien, die vorzugsweise aus Blech bestehen, vergrößert und ein vergrößerter Luftspalt entsteht, der selbstverständlich den Isolationseffekt verbessert.

Dieses Hitzeschild kann weiter in bezug auf die Isolationswirkung verbessert werden, wenn auf die Innenflächen der dort vorgeschlagenen Flachmaterialien zusätzlich eine Wärmedämmschicht aufgebracht wird. Hierzu eignen sich insbesondere organische oder anorganische Fasermaterialien, aber auch Metallgewebe, Gestricke oder Streckgitter. Diese verbessern weiterhin die Schalldämmung, die durch diese Hitzeschilder ebenfalls erzielt wird.

Dieses Hitzeschild besitzt jedoch den Nachteil, daß nicht jede beliebige Kontur des Hitzeschildes ausgebildet werden kann, um den gewünschten Effekt für die Anpassung an die verschiedenen Temperaturen zu erreichen. Außerdem ist die Isolationswirkung bei alleiniger Ausnutzung eines Luftspaltes ohne zusätzliche Wärmedämmstoffe begrenzt.

Beim Einsatz von Wärmedämmstoffen als Wärmedämmschicht, die auf die Außenbleche des Hitzeschildes aufgetragen werden, muß jedoch mit erhöhtem Fertigungs- und Kostenaufwand gerechnet werden. Alternativ kann die Wärmedämmschicht zwischen die beiden Außenbleche eines Hitzeschildes eingelegt werden. Hierfür ist jedoch das als Wärmedämmschicht einzulegende Material mittels eines Bindemittels abzubinden. Derartige Bindemittel weisen in der Regel organische Bestandteile auf, die bei hohen Temperaturen Probleme hervorrufen. Insbesondere sind die hierzu verwendeten organischen Bindemittel ökologisch und toxikologisch bedenklich, da sie bei den auftretenden hohen Temperaturen Gase abgeben oder chemische Reaktionen durchführen.

Aus der PCT/DE98/00065 ist daher ein Verfahren zur Herstellung eines Hitzeschildes bekannt, bei dem ein bindemittelfreies pulver- und/oder blättchenförmiges Isolationsmaterial auf eine der beiden als Platten ausgeformten Flachmaterialien aufgetragen wird und anschließend durch Druckeinwirkung zumindest bereichsweise verfestigt wird. Anschließend wird das zweite ebenfalls als Platte ausgebildete Flachmaterial auf das Isoliermaterial aufgelegt und beispielsweise durch Falten in eine form- und/oder kraftschlüssige Verbindung mit dem unteren Flachmaterial gebracht. Vorteilhaft an diesem Verfahren ist, daß auf den Einsatz eines ökologisch oder toxikologisch bedenklichen Bindemittels verzichtet werden kann. Nachteilig ist jedoch, daß das lose rieselfähige Isoliermaterial exakt auf die untere Platte in der gewünschten Verteilung aufgebracht werden muß. Hierzu ist es nötig, den Auftrag des rieselfähigen Materials auf ein Bauteil des herzustellenden Hitzeschildes exakt aufzubringen. Dieser Fertigungsweg ist daher aufwendig und kostenintensiv.

Ausgehend hiervon ist es daher Aufgabe der vorliegenden Erfindung, ein Verfahren und ein mit dem Verfahren hergestelltes Hitzeschild anzugeben, das einfach und kostengünstig durchführbar bzw. herstellbar ist. Insbesondere soll das damit hergestellte Hitzeschild unter Berücksichtigung ökologischer und toxikologischer Gesichtspunkte unbedenklich sein.

Erfindungsgemäß wird diese Aufgabe durch das Verfahren nach dem Oberbegriff des Anspruches 1 sowie durch das Hitzeschild nach dem Oberbegriff des Anspruches 27 in Verbindung mit ihren jeweiligen kennzeichnenden Merkmalen gelöst. Vorteilhafte Weiterbildungen des erfindungsgemäßen Verfahrens und des erfindungsgemäßen Hitzeschildes werden in den abhängigen Ansprüchen gegeben.

Nach dem erfindungsgemäßen Verfahren wird ein körner-, pulver- und/oder blättchenförmiges Isoliermaterial unverdichtet oder auch verdichtet in der gewünschten Form entsprechend dem herzustellenden Hitzeschild geformt und anschließend auf eine der beiden Außenplatten des Hitzeschildes aufgebracht. Anschließend wird das Hitzeschild mit der anderen Außenplatte versehen und beide Außenplatten miteinander form- und/oder kraftschlüssig verbunden. Auf diese Weise wird der Auftrag geeigneter Isoliermaterialschichten auf eine Außenplatte vereinfacht und genauer.

Die Übertragung des vorgeformten Isoliermaterials kann beispielsweise durch einen Sauger erfolgen. Besitzt der Sauger selbst eine der gewünschten Form entsprechende Kontur, so kann die Form des Isoliermaterials bereits durch die einfache Ansaugung des losen Materials erzeugt werden. Ist eine der Außenplatten mit Durchbrechungen versehen, so kann sie an dem Sauger, beispielsweise durch Ansaugen oder magnetisch, befestigt werden. Anschließend wird die Isolierplatte aus losem oder verdichtetem Material von dem Sauger an die Oberfläche der befestigten Außenplatte angesaugt und mitsamt der Außenplatte auf eine zweite Außenplatte aufgebracht.

Wird vorgeformtes loses Isoliermaterial auf die Außenplatte aufgebracht, so kann dieses anschließend verdichtet werden, indem mit dem Sauger oder einer anderen Preßplatte oder auch mit der anderen Außenplatte des Hitzeschildes das Isoliermaterial gegen die erste Außenplatte gepreßt wird.

Der Transport des vorgeformten Isoliermaterials zu der Außenplatte wird besonders einfach, sofern es vor dem Transport zu einer kohärenten Isolierplatte verdichtet und erst anschließend auf eine der beiden Außenplatten eines herzustellenden Hitzeschildes aufgebracht. Diese verdichtete kohärente Isolierplatte besitzt eine gewisse Eigenstabilität, die es ermöglicht, diese zu transportieren. Daraufhin wird die zweite Außenplatte auf die Isolierplatte aufgelegt und mit der anderen Außenplatte zu dem erfindungsgemäßen Verbund aus zwei Außenplatten mit mittiger Isolierschicht als Hitzeschild verbunden.

Vorteilhaft an dem erfindungsgemäßen Verfahren ist, daß das Isoliermaterial kein Bindemittel aufweisen muß. Dadurch ergeben sich keinerlei ökologische oder toxikologische Bedenken gegen ein derartiges Hitzeschild. Insgesamt ergibt sich weiterhin durch die geringen Bindungskräfte zwischen den einzelnen Körnern des verdichteten Isoliermaterials eine verbesserte Schalldämmung sowie geringere Resonanzpobleme bei dem erfindungsgemäßen Hitzeschild.

Durch die Verdichtung um einen Faktor bis zu 20, vorteilhafterweise um den Faktor 5 bis 10, des Isoliermaterials zu einer kohärenten Isolierplatte ergibt sich eine ausreichende eigene Festigkeit der Isolierplatte, so daß diese transportierbar ist, beispielsweise mit einem mit Lochplatte versehenen ebenen Sauger. Herstellungstechnisch ergibt sich dadurch der Vorteil, daß das Isoliermaterial unabhängig von der Gesamtmontage des Hitzeschildes in die gewünschte Form mit der gewünschten Dicke bzw. Dichten- oder Dickenverteilung gebracht werden kann. Weiterhin ist eine einfache Wiederverwendung des beim Verdichten des Isoliermaterials als Überschuß anfallenden Isoliermaterials möglich.

Die Verdichtung kann beispielsweise durch Walzen/Kalandrieren, anschließender Übergabe der Isolierplatte auf ein Band, Stanzen der Isolierplatte in die gewünschte Form und Übergabe an den als Transportmittel dienenden Sauger erfolgen. Alternativ kann eine Platte gepreßt, gestanzt und an den Sauger übergeben werden.

Die Verdichtung kann auch durch einen einzigen Preßvorgang einer gleichmäßig dicken Isoliermaterialschicht bzw. einer bereits mit unterschiedlichen geeigneten Dicken konturierten Isoliermaterialschicht oder auch in mehreren Preßvorgängen mit zwischen den einzelnen Preßvorgängen stattfindendem weiterem - auch lokal begrenztem - Auftrag von Isoliermaterial erfolgen.

Die Verdichtung kann auch so erfolgen, daß lediglich in einigen Bereichen das Isoliermaterial verdichtet wird und in den nicht verdichteten Bereichen anschließend das Isoliermaterial entfernt, beispielsweise weggeblasen oder abgesaugt wird. Dadurch lassen sich beliebige Strukturen, beispielsweise mit Löchern für Schrauben etc., erzeugen. Weiterhin läßt sich die Verdichtung des Materials so kontrollieren, daß Ausbuchtungen, Öffnungen, Sicken und/oder Stege in/an den zum Verdichten verwendeten Oberflächen eines Werkzeuges gezielt erzeugt werden können. Derartige Ausbuchtungen und Sicken oder Stege können zur Stabilisierung des Hitzeschildes, zur lokalen Verstärkung der Abschirmwirkung bzw. zur Materialeinsparung in Bereichen geringer Hitzebelastung angewendet werden.

Eine vorgeformte und verdichtete Isolierplatte kann auch mittels eines Bandes zu der ersten Außenplatte transportiert und auf dieser abgelegt werden. Dies kann beispielsweise dadurch erfolgen, daß am Bandende das Band von der kohärenten Isolierplatte beispielsweise über eine Bandumlenkrolle nach unten abgezogen wird und die Isolierplatte über das Bandende hinaus auf die Außenplatte geschoben wird. Dabei kann die Isolierplatte auf dem Band erzeugt werden, indem beispielsweise nichtexpandiertes Isoliermaterial wie Vermiculit auf dem Band abgelegt, verformt, auf dem Band erwärmt und expandiert und zugleich oder anschließend gepreßt wird.

Als loses Isoliermaterial eignen sich insbesondere Glimmer, expandierter Glimmer, nicht-expandiertes Graphit, expandiertes Graphit, Perlit oder Glimmerabbauprodukte wie Vermiculit oder expandierter Vermiculit. Es kann so insbesondere nichtexpandiertes Isoliermaterial, beispielsweise nichtexpandiertes Graphit oder nichtexpandiertes Vermiculit, auf eine Preßplatte aufgebracht und mittels der Preßplatte erwärmt und dabei expandiert werden. Die Platte ist hierzu vorgeheizt oder wird im Anschluß an den Materialauftrag, beispielsweise auf 250 °C, vorteilhafterweise 300 °C, oder höher erwärmt. Die Verdichtung kann dann während der Erwärmung des Isoliermaterials oder im Anschluß daran erfolgen. Als Preßplatte kann auch bei Auftrag einer Isolierplatte aus losem Isoliermaterial eine der Außenplatten des Hitzeschildes dienen.

Alternativ zum Auftrag des Isoliermaterials auf eine Preßplatte und anschließende Verdichtung ist es auch möglich, das Isoliermaterial als lose Schicht zu erzeugen und als lose Schicht von einem ebenen Sauger, beispielsweise in Form einer Lochplatte, aufzunehmen. Anschließend kann der Sauger zu einer weiteren ebenen Platte transportiert und dort in der beispielsweise durch den Sauger vorgegebenen äußeren Form zu einer Isolierplatte verdichtet und daraufhin auf einer der Außenplatten des Hitzeschildes aufgebracht werden.

Als Isoliermaterial für das vorbeschriebene Verfahren eignen sich insbesondere Glimmer, expandierter Glimmer, nicht-expandiertes Graphit, expandiertes Graphit, Perlit oder Glimmerabbauprodukte, wie beispielsweise Vermiculit oder expandierter Vermiculit. Vorteilhafterweise weist dieses eine Körnung bis zu 10 mm, vorzugsweise zwischen 1 und 3 mm auf. Das Isoliermaterial kann dabei auch feinere Anteile aufweisen. Das für die Herstellung der Isolierplatten verwendete Isoliermaterial kann auch weitere Zusatzstoffe wie anorganische Fasern enthalten. Derartige Zusatzstoffe können die Festigkeit der Isolierplatte verbessern. Besonders geeignet sind hierfür anorganische Fasern, vorzugsweise mit einem nicht lungengängigen Durchmesser > 5 µm, beispielsweise Glasfasern oder mineralische Fasern. Diese sind auch ökologisch und toxikologisch unbedenklich.

Das nach diesem Verfahren hergestellte Hitzeschild kann nach der Verbindung der beiden Außenplatten, beispielsweise durch Umbördeln, Falzen etc., dreidimensional verformt werden. Dadurch ist eine Anpassung an die sterischen Verhältnisse am Einbauort, beispielsweise im Motorraum, möglich. Da das verwendete Isoliermaterial lediglich geringe Kräfte zwischen einzelnen Körnern besitzt, gleiten diese leicht aneinander vorbei, so daß das Hitzeschild auch nach Verbindung der Außenplatten und der Isolierplatte leicht zu verformen ist.

Im folgenden werden einige Ausführungsformen des erfindungsgemäßen Verfahrens und des erfindungsgemäßen Hitzeschildes beschrieben. Es zeigen:
- Fig. 1: ein erfindungsgemäßes Hitzeschild und
- Fig. 2: ein weiteres erfindungsgemäßes Hitzeschild.

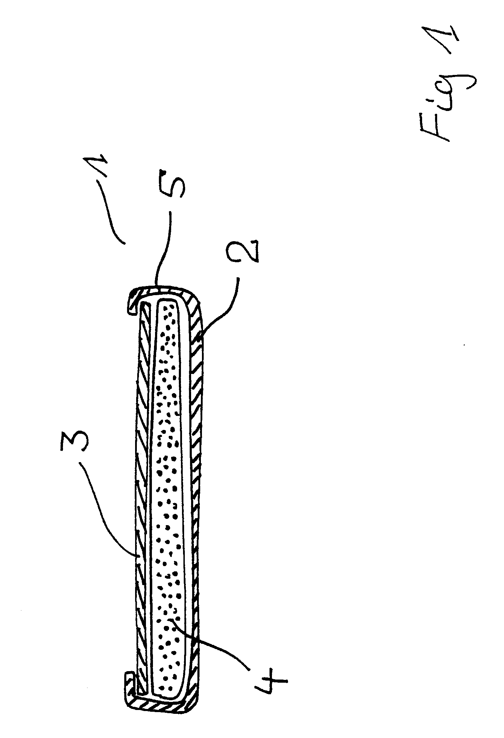

Fig. 1 zeigt ein erfindungsgemäßes Hitzeschild 1. Dieses besteht aus einer unteren Außenplatte 2 und einer oberen Außenplatte 3. Die beiden Außenplatten 2 und 3 sind im Randbereich 5 durch Umbördeln der Außenkante der Außenplatte 3 durch die Außenkante der Außenplatte 2 miteinander fest verbunden. Zwischen den beiden Außenplatten 2 und 3 befindet sich eine Platte 4 aus dem Isoliermaterial Vermiculit mit einer Körnung von ca. 1 bis 3 mm.

Das in Fig. 1 dargestellte Hitzeschild 1 wurde hergestellt, indem expandierter Vermiculit mit einer Körnung von 1 bis 3 mm als unverdichtete Isoliermaterialschicht mit einer Dicke zwischen 5 und 7 mm auf eine in der gewünschten Kontur ausgeformte Platte aufgetragen wurde. Die Materialdosierung erfolgte über ein Rakelsystem mit Langloch-Trichter. Dies kann auch mit einem Transportband/Bürstensystem) oder mittele einer Dosierwalze mit Bürstenoberfläche geschehen. Überschüssiges Material fiel an der Platte vorbei. Anschließend wurde das Vermiculit um einen Faktor 8 verdichtet. Dadurch entsteht eine Isolierplatte 4, die ausreichend Eigenstabilität aufweist, um mittels eines als Lochplatte ausgestalteten ebenen Saugers aufgenommen und auf ein ebenes Blech 2 mit größeren Außenmaßen als die Isolierplatte 4 aufgelegt zu werden. Anschließend wird ein weiteres ebenes Blech 2 mit der Dimension der Isolierplatte auf die Isolierplatte 4 aufgelegt. Das untere Blech 2 dient als untere Außenplatte 2 und wird abschließend um den Rand des als obere Außenplatte 3 wirkenden oberen Bleches umgefalzt.

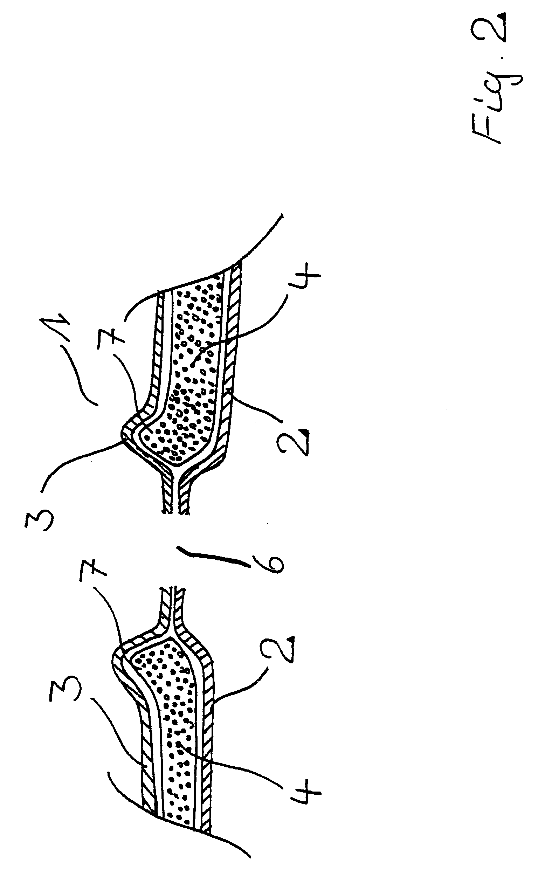

Fig. 2 zeigt ein weiteres erfindungsgemäßes Hitzeschild 1. Dabei sind entsprechende Elemente des Hitzeschildes 1 mit entsprechenden Bezugszeichen, wie in Fig. 1 bezeichnet. Eine untere Anßenplatte 2 und eine obere Außenplatte 3 schließen eine Isolierplatte 4 ein. Die untere Außenplatte 2 und die obere Außenplatte 3 sind im Bereich 6 zusammengeführt, in dem eine Bohrung beispielsweise für die Durchführung einer Schraube in der unteren Außenplatte 2 und der oberen Außenplatte 3 vorgesehen ist. In den an diesen Bereich 6 angrenzenden Bereichen 7 ist die obere Außenplatte 3 aufgewölbt, so daß sich dort ein lokal vergrößerter Abstand zwischen den beiden Außenplatten 2 und 3 ergibt. In diesem Bereich 7 besitzt dementsprechend die Isolierplatte 4 eine größere Dicke. Diese Materialanhäufung im Bereich 7 bewirkt eine wesentliche erhöhte Wärme- und Schalldämmung in dem die Durchgangsöffnung im Bereich 6 umgebenden Bereich 7. Dies ist insbesondere deshalb vorteilhaft, weil die Wärme- und Schalldämmung im Bereich 6 aufgrund des fehlenden Isoliermaterials verringert ist und daher im unmittelbar angrenzenden Bereich 7 ein Ausgleich geschaffen wird.

Zur Herstellung dieses Hitzeschildes 1 wird so vorgegangen, daß zuerst die beiden Außenplatten 2 und 3 mit der entsprechenden Durchgangsöffnung im Bereich 6 hergestellt werden. Die Außenplatten 2 und 3 werden dabei bereits entsprechend ihrer endgültigen Form einschließlich der Ausbuchtungen im Bereich 7 ausgeformt. Anschließend wird eine Isolierplatte aus Vermiculit der Körnung 1 bis 3 mm um den Faktor 5 verdichtet. Die Verdichtung erfolgt durch Pressen in einem Formwerkzeug, so daß die Vermiculit-Platte 4 bereits die in Fig. 2 dargestellte Form mit der Verdickung im Bereich 7 sowie der Aussparung im Bereich 6 aufweist. Anschließend wird diese Platte 4 durch einen als Lochplatte ausgebildeten Sauger aufgenommen und auf die Außenplatte 2 in richtiger Positionierung aufgelegt. Dann wird die obere Außenplatte 3 auf die Isolierplatte 4 aufgelegt und mit der unteren Außenplatte 2 in der bei Fig. 1 beschriebenen Weise verbunden.

Zur anschließenden Reinigung des Saugers von losem und überschüssigem Vermiculit wird dieser kurzzeitig mit Überdruck betrieben und so das anhaftende Vermiculit weggeblasen.

## Patentansprüche

1. Verfahren zur Herstellung eines Hitzeschildes (1) zur Verwendung in Kraftfahrzeugen, bestehend aus einem Isoliermaterial (4), das zwischen zwei zumindest teilweise plastisch verformbaren Außenplatten (2, 3) aufgenommen ist, wobei körner-, pulver- und/oder blättchenförmiges binderfreies Isoliermaterial (4) auf eine (2) der beiden Außenplatten diese zumindest teilweise überdeckend aufgebracht wird und die zweite Außenplatte (3) in oberhalb des Isoliermaterials (4) liegender Position mit der ersten Außenplatte (2) durch eine form- und/oder kraftschlüssige Verbindung der Außenplatten (2,3) an geeigneten Stellen wie z.B. in deren Randbereichen (5) verbunden wird,
dadurch **gekennzeichnet,**
daß das Isoliermaterial (4) in einer gewünschten Kontur als Isolierplatte geformt und anschließend in dieser Kontur auf eine (2) der beiden Außenplatten diese zumindest teilweise überdeckend aufgebracht wird.

2. Verfahren nach Anspruch 1,
dadurch gekennzeichnet, daß das Isoliermaterial unverdichtet auf eine der beiden Außenplatten aufgebracht wird und gegebenenfalls anschließend verdichtet wird.

3. Verfahren nach Anspruch 2,
dadurch gekennzeichnet, daß das Isoliermaterial (4) als Schicht erzeugt, von einem flächigen Sauger aufgenommen und durch Pressung verdichtet wird.

4. Verfahren nach Anspruch 2 oder 3,
dadurch gekennzeichnet, daß das Isoliermaterial durch einen Sauger mit einer Kontur entsprechend der gewünschten Kontur der Isolierplatte aufgenommen wird.

5. Verfahren nach mindestens einem der Ansprüche 2 bis 4,
dadurch gekennzeichnet, daß das Isoliermaterial durch einen Sauger auf eine der Außenplatten aufgebracht und das Isoliermaterial von dem Sauger selbst oder durch eine Preßplatte oder durch Andrücken der anderen Außenplatte verdichtet wird.

6. Verfahren nach Anspruch 1,
dadurch gekennzeichnet, daß das Isoliermaterial (4) vor dem Aufbringen auf eine (2) der beiden Außenplatten zu einer kohärenten Isolierplatte verdichtet wird.

7. Verfahren nach Anspruch 6,
dadurch gekennzeichnet, daß das Isoliermaterial (4) in einer an die Konturen der Außenplatten angepaßten Form verdichtet wird.

8. Verfahren nach Anspruch 6 oder 7,
dadurch gekennzeichnet, daß das Isoliermaterial (4) durch Walzen/Kalandrieren, gegebenenfalls mit einer Prägewalze in der gewünschten Form, verdichtet wird.

9. Verfahren nach mindestens einem der Ansprüche 6 bis 8,
dadurch gekennzeichnet, daß die Isolierplatte nach der Verdichtung in der gewünschten Form ausgestanzt wird.

10. Verfahren nach mindestens einem der Ansprüche 6 bis 9,
dadurch gekennzeichnet, daß die Isolierplatte von einem Sauger aufgenommen und auf eine der Außenplatten aufgelegt wird.

11. Verfahren nach mindestens einem der vorhergehenden Ansprüche,
dadurch gekennzeichnet, daß das Isoliermaterial um einen Faktor bis zu 20, vorzugsweise um einen Faktor 5 bis 10 verdichtet wird.

12. Verfahren nach mindestens einem der vorhergehenden Ansprüche, daß an einem Sauger eine Außenplatte, die Durchbrechungen aufweist, beispielsweise durch Ansaugen an dem Sauger oder magnetisch befestigt wird, und die Isolierplatte anschließend von dem Sauger angesaugt, aufgenommen und mitsamt der Außenplatte auf die zweite Außenplatte aufgebracht wird.

13. Verfahren nach mindestens einem der vorhergehenden Ansprüche,
dadurch gekennzeichnet, daß die Verdichtung durch einen einzigen Preßvorgang erzeugt wird.

14. Verfahren nach mindestens einem der vorhergehenden Ansprüche,
dadurch gekennzeichnet, daß die Verdichtung des Isoliermaterials (4) in mehreren Preßvorgängen, gegebenenfalls mit weiterem, auch lokal begrenztem Auftrag von Isoliermaterial zwischen den einzelnen Preßvorgängen, erfolgt.

15. Verfahren nach mindestens einem der vorhergehenden Ansprüche,
dadurch gekennzeichnet, daß das Isoliermaterial (4) in oder auf einer Form verdichtet wird.

16. Verfahren nach mindestens einem der vorhergehenden Ansprüche,
dadurch gekennzeichnet, daß gegebenenfalls mit lokal unterschiedlichen Dicken und/oder Dichten verdichtet wird.

17. Verfahren nach mindestens einem der vorhergehenden Ansprüche,
dadurch gekennzeichnet, daß das Isoliermaterial (4) nur bereichsweise verdichtet wird und anschließend das in den nicht verdichteten Bereichen vorhandene Isoliermaterial entfernt, vorteilhafterweise weggeblasen oder abgesaugt wird.

18. Verfahren nach mindestens einem der vorhergehenden Ansprüche,
dadurch gekennzeichnet, daß die Verdichtung des Isoliermaterials (4) durch Ausbuchtungen, Öffnungen, Sicken und/oder Stegen in/an den zum Verdichten verwendeten Oberflächen eines Preßwerkzeuges gezielt beeinflußt wird.

19. Verfahren nach mindestens einem der vorhergehenden Ansprüche,
dadurch gekennzeichnet, daß als Isoliermaterial (4) Glimmer expandierter Glimmer, nicht-expandiertes Graphit, expandiertes Graphit, Perlit oder ein Glimmerabbauprodukt wie Vermiculit oder expandierter Vermiculit verwendet wird.

20. Verfahren nach mindestens einem der vorhergehenden Ansprüche,
dadurch gekennzeichnet, daß ein Isoliermaterial (4) mit einer Körnung bis zu 10 mm, vorzugsweiwe zwischen 1 mm und 3 mm verwendet wird.

21. Verfahren nach mindestens einem der vorhergehenden Ansprüche,
dadurch gekennzeichnet, daß als Isoliermaterial ein Material verwendet wird, das weitere Zusatzstoffe wie anorganische Fasern, vorzugsweise mit einem Durchmesser > 5 µm, enthält.

22. Verfahren nach mindestens einem der vorhergehenden Ansprüche,
dadurch gekennzeichnet, daß die zu verdichtende Schicht aus Isoliermaterial (4) eine Dicke zwische 0,5 mm und 30 mm, vorzugsweise zwischen 5 mm und 8 mm aufweist.

23. Verfahren nach mindestens einem der vorhergehenden Ansprüche,
dadurch gekennzeichnet, daß die beiden Außenplatten (2, 3) durch zumindest teilweises Umbördeln am Rand (5) verbunden werden.

24. Verfahren nach mindestens einem der vorhergehenden Ansprüche,
dadurch gekennzeichnet, daß das Hitzeschild (1) nach der Verbindung der beiden Außenplatten dreidimensional verformt wird.

25. Verfahren nach mindestens einem der vorhergehenden Ansprüche,
dadurch gekennzeichnet, daß zum Verdichten nichtexpandiertes Isoliermaterial, vorteilhafterweise nichtexpandiertes Graphit oder nichtexpandiertes Vermiculit, auf eine Preßunterlage aufgebracht wird, wobei die Preßunterlage über die Expansionstemperatur des nichtexpandierten Isolationsmaterials bereits erwärmt ist oder anschließend erwärmt wird, und anschließend die Verdichtung durchgeführt wird.

26. Verfahren nach Anspruch 25,
dadurch gekennzeichnet, daß die Preßunterlage auf 250 °C oder höher, vorzugsweise 300 °C oder höher, erwärmt ist bzw. wird.

27. Hitzeschild (1), hergestellt nach einem Verfahren nach mindestens einem der vorhergehenden Ansprüche,
dadurch **gekennzeichnet,**
daß zwischen zwei form- und/oder kraftschlüssig miteinander verbundenen Außenplatten (2, 3) eine Isolierplatte aus verdichtetem Isoliermaterial (4) angeordnet ist.

28. Hitzeschild nach Anspruch 27,
dadurch gekennzeichnet, daß die Isolierplatte aus um einen Faktor bis zu 20, vorzugsweise um den Faktor 5 bis 10 verdichtetem Isoliermaterial (4) besteht.

29. Hitzeschild nach Anspruch 27 oder 28,
dadurch gekennzeichnet, daß das Isoliermaterial (4) Glimmer, expandierter Glimmer, nicht-expantiertes Graphit, expandiertes Graphit, Perlit oder ein Glimmerabbauprodukt wie Vermiculit oder expandiertes Vermiculit ist.
